# EUROPÄISCHE PATENTSCHRIFT

(11) **EP 3 261 234 B1**
(45) Veröffentlichungstag und Bekanntmachung des Hinweises auf die Patenterteilung: **18.12.2019**
(21) Anmeldenummer: 17000926.0
(22) Anmeldetag: 23.01.2014
(51) Int. Cl.: H02K 19/10, H02K 1/24, H02K 29/03

(54) **ELEKTROMASCHINE MIT ROTOR**
ELECTRIC MACHINE WITH ROTOR
MACHINE ÉLECTRIQUE DOTÉE D'UN ROTOR

(30) Priorität: 13.02.2013 DE 102013002404
(43) Veröffentlichungstag der Anmeldung: 27.12.2017
(62) Teilanmeldung aus: 14701290.0
(73) Patentinhaber: SEW-EURODRIVE GmbH & Co. KG, 76646 Bruchsal (DE)
(72) Erfinder: Krämer, Andre, D-75015 Bretten (DE)

(56) Entgegenhaltungen:
- GB-A- 1 292 111
- US-A- 4 074 160
- US-A1- 2003 111 927
- US-A1- 2010 026 128
- US-B1- 6 177 745

## Beschreibung

Die Erfindung betrifft eine Elektromaschine mit Rotor.

Aus der US 5 818 140 A ist ein Reluktanzmotor bekannt. Dabei weist der Stator eine Anzahl von Statornuten n_S auf. Der Rotor weist ein Blechpaket auf, das in Rotorachsrichtung paketiert ist. Jedes Einzelblech weist Ausnehmungen auf, die an einer Umfangsposition einen minimalen Radialabstand aufweisen, wobei in und entgegen der Umfangsrichtung von dieser Umfangsposition des radialen Minimums beabstandet radiale Maxima ausgeprägt sind, die einen derart großen Radialabstand aufweisen, dass die radiale Wandstärke für die magnetischen Flusslinien vernachlässigbare Auswirkungen haben. Somit bilden diese Ausnehmungen bezüglich ihrer Wirkung auf das Magnetfeld Nuten. Diese Nuten erstrecken sich in Richtung des Stapels, also in axialer Richtung.

Aus der US 4 074 160 A ist eine rotatorische Elektromaschine bekannt.

Aus der US 6 177 745 B1 ist als **nächstliegender Stand der Technik** ein Synchronmotor mit Dauermagneten bekannt.

Aus der US 2010/026128 A1 ist ein Dauermagnet-Motor mit ungleichen Polen bekannt.

Aus der US 2003/111927 A1 ist ein Synchronmotor bekannt, dessen Rotor Flusssperren aufweist.

Aus der GB 1 292 111 A ist eine dynamoelektrische Maschine bekannt.

Die Anzahl der auf diese Weise gebildeten Nuten am Rotor ist größer als 6, unterscheidet sich von der Anzahl der Statornuten, wobei der Unterschied unterschiedlich ist von der Zahl zwei. Außerdem ist die Anzahl der Statornuten ein ganzzahliges Vielfaches der Anzahl der Nuten am Rotor.

Des Weiteren sind die Nuten am Rotor voneinander regelmäßig beabstandet. Dabei ist in Umfangsrichtung eine diskrete Drehsymmetrie von 90° vorhanden.

Aus der Figur 4a der US 4 074 160 A ist ein Reluktanzmotor bekannt, bei dem die Oberflächen-Mündungspunkte der Flusssperren der Pole gleichartige Punktbilder darstellen. Denn bei Einteilung des Umfangs in Umfangswinkelbereiche von 360°/(2p), also 90°, von denen zumindest einer am Umfangswinkelwert einer Symmetrieebene des Blechpakets beginnt, sind die Punktbilder des Umfangswinkelbereichs durch eine Drehung um 90° in Deckung bringbar mit dem Punktbild des in Umfangsrichtung benachbarten Umfangswinkelbereichs.

Aus dem Fachbuch "Elektrische Maschinen und Antriebe - Grundlagen und Betriebsverhalten", Autor: Andreas Binder, Verlag Springer, ISBN: 978-3-540-71849-9 sind auf Seite 805 in Bild 10.2.7-1 Flusssperren bekannt, die auch als Flussbarrieren bezeichnet werden.

Aus der US 2003/111927 A1 ist ein Synchronmotor bekannt.

Aus der GB 1 292 111 A ist eine dynamoelektrische Maschine bekannt.

Der Erfindung liegt daher die Aufgabe zugrunde, eine Elektromaschine mit Rotor weiterzubilden, wobei die Drehmomentwelligkeit verringert werden soll.

Erfindungsgemäß wird die Aufgabe bei der Elektromaschine mit Rotor nach den in Anspruch 1 angegebenen Merkmalen gelöst.

Wichtige Merkmale der Elektromaschine nach Anspruch 1 sind, dass sie mit Rotor vorgesehen ist,
wobei der Rotor ein Blechpaket aus Einzelblechteilen aufweist,
insbesondere wobei die Einzelblechteile gestapelt angeordnet sind, insbesondere in Rotorachsrichtung paketiert sind, insbesondere stanzpaketiert sind,
wobei am Einzelblechteil in Umfangsrichtung hintereinander Pole, insbesondere Reluktanzpole, insbesondere 2∗p Pole, ausgebildet sind, wobei jeder Pol einen Winkelbereich, also die Polteilung, überdeckt,
insbesondere der Winkelbereich 360°/(2∗p) beträgt, wobei p die Anzahl der Polpaare ist und p eine ganze Zahl ist,
wobei das Einzelblechteil in jedem der Winkelbereiche eine Ausnehmung aufweist, somit jeder der Pole eine Ausnehmung aufweist,
wobei die Ausnehmung der jeweils punktsymmetrisch zueinander angeordneten Pole punktsymmetrisch zueinander ausgeführt sind,
wobei die eine Ausnehmung eines Pols nur gleichartig geformt sind zur Ausnehmung des punktsymmetrisch zu dem Pol angeordneten Pols und/oder durch Drehung um einen Winkelbetrag nur in Deckung bringbar ist zur Ausnehmung des punktsymmetrisch zu dem Pol angeordneten Pols, insbesondere also jeder Pol zu jedem anderen, nicht jeweils punktsymmetrisch angeordneten Pol unterschiedlich geformt ist, und/oder nicht durch Drehung um einen Winkelbetrag in Deckung bringbar sind mit der Ausnehmung eines anderen nicht punktsymmetrisch angeordneten Pols.

Von Vorteil ist dabei, dass die Drehmomentwelligkeit reduziert ist. Denn die bei der Drehbewegung des Rotors relativ zum Stator von den Rotor nuten in Verbindung mit den Statornuten erzeugten Oberwellen im Leitwert und somit auch im Drehmoment der Maschine sind reduziert. Außerdem ist der Rotor ausgewuchtet, insbesondere bezüglich des Trägheitsmoments. Denn bis auf die sich gegenüberliegenden Pole, also diejenigen Pole die in sich übergehen durch gedachte Drehung eines der Pole um 180° um die Rotorachse, sind die sonstigen Pole asymmetrisch. Es gibt also keinen Verdrehwinkel, bei dem sie übergehen in einen anderen Pol. Nur bei Drehung um 180° gehen sie jeweils in den ihnen jeweils gegenüberliegenden Pol.

Erfindungsgemäß weist der Rotor ein Blechpaket aus Einzelblechteilen auf,
insbesondere wobei die Einzelblechteile gestapelt angeordnet sind, insbesondere in Rotorachsrichtung paketiert sind, insbesondere stanzpaketiert sind,
wobei an einem, insbesondere jeweiligen, Einzelblechteil Flusssperren ausgebildet sind,
insbesondere wobei die Flusssperren durch jeweilige Ausnehmungen und/oder im Betrieb der Elektromaschine mit Nennstrom gesättigte Stegbereiche des Einzelblechteils gebildet sind,
wobei die Flusssperren an der Oberfläche, insbesondere radial äußeren Oberfläche, des Einzelblechteils münden, insbesondere nach radial außen, insbesondere in den Luftspalt zwischen dem Rotor und einem diesen Rotor aufnehmenden Stator,
wobei der Schwerpunkt des jeweiligen zugehörigen Mündungsbereichs der jeweiligen Flusssperre als jeweiliger Oberflächen-Mündungspunkt bezeichenbar ist,
insbesondere wobei das Einzelblechteil eine Punktsymmetrie zur Rotorachse aufweist,
wobei das Einzelblechteil Symmetrieebenen aufweist, welche die Rotorachse enthalten,
wobei der Umfang aus (2 ^{∗} p) Umfangswinkelbereichen zusammengesetzt ist, wobei jeder der Umfangswinkelbereiche einen Winkelbereich von 360°/(2 ^{∗} p) überdeckt und zumindest einer der Umfangswinkelbereiche einseitig von einer der Symmetrieebenen berandet ist,
wobei die Anordnung der Oberflächen-Mündungspunkte eine Punktsymmetrie aufweist,
wobei die Anordnung der Oberflächen-Mündungspunkte in einem der Umfangswinkelbereiche durch Drehung um die Rotorachse um einen Winkelbetrag von k ^{∗} 360° /(2 ^{∗} p) nicht in Deckung bringbar ist mit der Anordnung der Oberflächen-Mündungspunkte in einem anderen der Umfangswinkelbereiche,
wobei k eine ganze Zahl ist, die größer als 0 und kleiner als p ist.

Von Vorteil ist dabei, dass einerseits eine Punktsymmetrie vorliegt, also das Punktbild der Oberflächen-Mündungspunkte punktsymmetrisch zum Schnittpunkt der Rotorachse mit der Einzelblechteilebene ist. Andererseits ist eine Asymmetrie vorhanden, weil bei Drehung um eine Polteilung oder um zumindest weniger als p Polteilungen, wobei p die Polpaarzahl ist, das Punktbild der Oberflächen-Mündungspunkte der ersten Polteilung nicht in Deckung bringbar ist mit dem Punktbild einer anderen Polteilung, die nicht die punktsymmetrisch gegenüberliegende Polteilung ist.

Bei einer vorteilhaften Ausgestaltung weist der Rotor ein Blechpaket aus Einzelblechteilen auf,
insbesondere wobei die Einzelblechteile gestapelt angeordnet sind, insbesondere in Rotorachsrichtung paketiert sind, insbesondere stanzpaketiert sind,
wobei am Einzelblechteil in Umfangsrichtung hintereinander Pole, insbesondere Reluktanzpole, insbesondere 2^{∗}p Pole, ausgebildet sind, wobei jeder Pol einen Winkelbereich, also die Polteilung, überdeckt,
insbesondere wobei der Winkelbereich jeweils gleich ist, insbesondere 360° /(2^{∗}p) beträgt, wobei p die Anzahl der Polpaare ist und p eine ganze Zahl ist,
wobei das Einzelblechteil in jedem der Winkelbereiche eine einzige Ausnehmung aufweist, somit jeder der Pole eine einzige Ausnehmung aufweist,
wobei jedem Pol punktsymmetrisch gegenüberliegend ein gleichartig geformter Pol angeordnet ist und wobei die anderen Pole zu ihm unterschiedlich geformt sind,
insbesondere wobei jeder Pol zu jedem anderen, nicht punktsymmetrisch zu dem jeweiligen Pol angeordneten Pol unterschiedlich geformt ist und gleichartig geformt ist zu dem punktsymmetrisch zu dem jeweiligen Pol angeordneten Pol.

Dabei ist die Polform auf das magnetische Erscheinungsbild bezogen und somit die Form des jeweiligen Pols entscheidend bestimmt durch das Punktbild der Oberflächen-Mündungspunkte der Flusssperren.

Von Vorteil ist dabei, dass die Drehmomentwelligkeit reduziert ist. Denn die bei der Drehbewegung des Rotors relativ zum Stator von den Rotor nuten in Verbindung mit den Statornuten erzeugten Oberwellen im Leitwert und somit auch im Drehmoment der Maschine sind reduziert. Außerdem ist der Rotor ausgewuchtet, insbesondere bezüglich des Trägheitsmoments. Denn bis auf die sich gegenüberliegenden Pole, also diejenigen Pole die in sich übergehen durch gedachte Drehung eines der Pole um 180° um die Rotorachse, sind die sonstigen Pole asymmetrisch. Es gibt also keinen Verdrehwinkel, bei dem sie übergehen in einen anderen Pol. Nur bei Drehung um 180° gehen sie jeweils in den ihnen jeweils gegenüberliegenden Pol.

Bei einer vorteilhaften Ausgestaltung weist jeder Pol zumindest eine Flusssperre auf, die durch die Ausnehmung gebildet ist,
insbesondere wobei die Flusssperre eine *magnetische Nut aufweist.* Von Vorteil ist dabei, dass eine einfache Fertigung des Einzelblechteils durch Stanzen ausführbar ist.

Bei einer vorteilhaften Ausgestaltung ist der von jedem Pol überdeckte Winkelbereich betragsgleich. Von Vorteil ist dabei, dass eine einfache Herstellung ermöglicht ist.

Bei einer vorteilhaften Ausgestaltung weist jede der Ausnehmungen in Umfangsrichtung bei einer erste Winkelposition einen kleinsten Radialabstand auf und bei einer in Umfangsrichtung zur ersten Winkelposition beabstandeten zweiten Winkelposition einen, insbesondere lokal, maximalen Radialabstand und bei einer entgegen der Umfangsrichtung zur ersten Winkelposition beabstandeten dritten Winkelposition einen, insbesondere lokal, maximalen Radialabstand,
wobei eine erste Winkeldifferenz dem Winkelabstand vom Beginn des Winkelbereichs zur zweiten Winkelposition ntspricht,
wobei eine zweite Winkeldifferenz dem Winkelabstand vom Ende des Winkelbereichs zur dritten Winkelposition entspricht. Von Vorteil ist dabei, dass die radiale Restwandstärke des Einzelblechteils im Bereich der Maxima sehr gering ist und somit im Wesentlichen eine auf Magnetfeldlinien wirkende Nut in diesen Bereichen jeweils angeordnet ist.

Bei einer vorteilhaften Ausgestaltung ist die erste Winkeldifferenz eines Pols stets unterschiedlich zur ersten Winkeldifferenz des in oder entgegen der Umfangsrichtung benachbarten Pols
und/oder
die zweite Winkeldifferenz eines Pols ist stets unterschiedlich zur zweiten Winkeldifferenz des in oder entgegen der Umfangsrichtung benachbarten Pols. Von Vorteil ist dabei, dass

Bei einer vorteilhaften Ausgestaltung sind in Umfangsrichtung vier Pole hintereinander angeordnet. Von Vorteil ist dabei, dass die Pole nicht gleichartig ausgeführt sind und somit jeweils unterschiedlich sind.

Bei einer vorteilhaften Ausgestaltung ist das Blechpaket in axialer Richtung aus einer Anzahl m von Segmenten zusammengesetzt, wobei die Segmente gleichartig ausgeführt sind, aber jedes Segment zum axial benachbarten Segment einen in Umfangsrichtung vorgesehenen Verdrehwinkelbetrag von 360° /(m ^{∗} n_S) aufweist,
wobei n_S die Anzahl der in Umfangsrichtung hintereinander angeordneten Statornuten ist. Von Vorteil ist dabei, dass eine weiter verringerte Drehmomentwelligkeit erreichbar ist.

Bei einer vorteilhaften Ausgestaltung weist jeder Pol mehrere durch jeweilige Ausnehmungen gebildete Flusssperren auf. Von Vorteil ist dabei, dass eine höhere Anzahl von Rotornuten einfach herstellbar ist.

Bei einer vorteilhaften Ausgestaltung weisen unterschiedliche Pole eine unterschiedliche Anzahl an Flusssperren und/oder von Ausnehmungen auf. Von Vorteil ist dabei, dass die Pole nicht gleich sind und somit die Drehmomentweiligkeit reduziert ist.

Bei einer vorteilhaften Ausgestaltung weisen die Pole eine einzige weitere Ausnehmung auf, die bei allen Polen gleichartig ausgebildet sind. Von Vorteil ist dabei, dass eine einfache Herstellung ermöglicht ist.

Bei einer vorteilhaften Ausgestaltung weist der Stator der Elektromaschine eine in Umfangsrichtung hintereinander angeordnete und jeweils einzeln bewickelte Zähne auf. Von Vorteil ist dabei, dass ein solcher mit Einzelzahnwicklung ausgestatteter Stator einfach herstellbar ist und einen hohen Wirkungsgrad erreichbar macht.

Weitere Vorteile ergeben sich aus den Unteransprüchen. Die Erfindung auf ist die Merkmalskombination der Ansprüche beschränkt.

Die Erfindung wird nun anhand von Abbildungen näher erläutert:
In der Figur 1 ist ein Einzelblechteil 1 des stanzpaketierten Blechpakets des erfindungsgemäßen Reluktanzmotors gezeigt.
In der Figur 2 ist sind die zugehörigen Oberflächen-Mündungspunkte der Flusssperren des Einzelblechteils 1 abstrakt dargestellt, wobei das Punktbild die Form der magnetischen Pole wesentlich bestimmt.
In Figur 3 ist für ein anderes Ausführungsbeispiel, insbesondere eine sechspolige Maschine, wiederum das Punktbild der Oberflächen-Mündungspunkte der Flusssperren des Einzelblechteils 1 abstrakt dargestellt.

Dabei sind die vorzugsweise zueinander gleichartig ausgeführten Einzelblechteile 1 in Rotorachsrichtung gestapelt angeordnet und/oder schweißverbunden.

Dabei weist der Stator eine Anzahl von Statornuten n_S auf. In Umfangsrichtung zwischen den Nuten ist ein jeweils mit einer Spule bewickelter Einzelzahn angeordnet. Jeder Einzelzahn weist einen pilzkopfartig verbreiterten Zahnkopf auf.

Der Rotor weist ein Blechpaket auf, das in Rotorachsrichtung paketiert ist. Jedes Einzelblechteil 1 weist Ausnehmungen 2 auf, die an einer Umfangsposition einen minimalen Radialabstand aufweisen, wobei in und entgegen der Umfangsrichtung von dieser Umfangsposition des radialen Minimums beabstandet radiale Maxima ausgeprägt sind, die einen derart großen Radialabstand aufweisen, dass die radiale Wandstärke für die magnetischen Flusslinien vernachlässigbare Auswirkungen haben. Somit bilden diese Ausnehmungen bezüglich ihrer Wirkung auf das Magnetfeld Nuten. Diese Nuten erstrecken sich in Richtung des Stapels, also in axialer Richtung.

Die Nuten bilden somit Flusssperren für die vom Stator erzeugten Magnetfeldlinien.

Die genannten radialen Restwandstärken sind also vernachlässigbar, so dass zwischen Stator und Rotor nicht nur ein Luftspalt vorhanden ist sondern im Blechpaket die Ausnehmungen als Flusssperren wirken. Das radial zwischen den Ausnehmungen des jeweiligen Einzelblechteils angeordnete Material des Einzelblechteils leitet die Magnetfeldlinien in Umfangsrichtung zwischen zwei Ausnehmungen entlang.

Der Rotor weist in Umfangsrichtung mehrere Pole auf, wobei jeder Pol innerhalb der des Winkelbereichs von 360° /(2 ^{∗} p), also innerhalb einer jeweiligen Polteilung, angeordnet ist, wobei p die Anzahl der Polpaare ist und eine ganze Zahl ist.

Die zur Rotorachse sich punktsymmetrisch gegenüberliegenden Pole sind gleichartig ausgeführt. Aber ansonsten sind die Pole voneinander unterschiedlich ausgeführt, gehen also nicht durch Drehung um einen Winkelbetrag um die Rotorachse ineinander über.

Somit ist der drehbar gelagerte Rotor bezüglich seines mechanischen Trägheitsmoments ausgewuchtet.

Die Umfangspositionen der Rotornuten sind durch die Winkelabstände der Rotornut, insbesondere der Mitte der Rotornut und/oder der Winkelposition des jeweils maximalen Radialabstands der Rotornut, zum Beginn oder Ende einer jeden Polteilung hin kennzeichenbar.

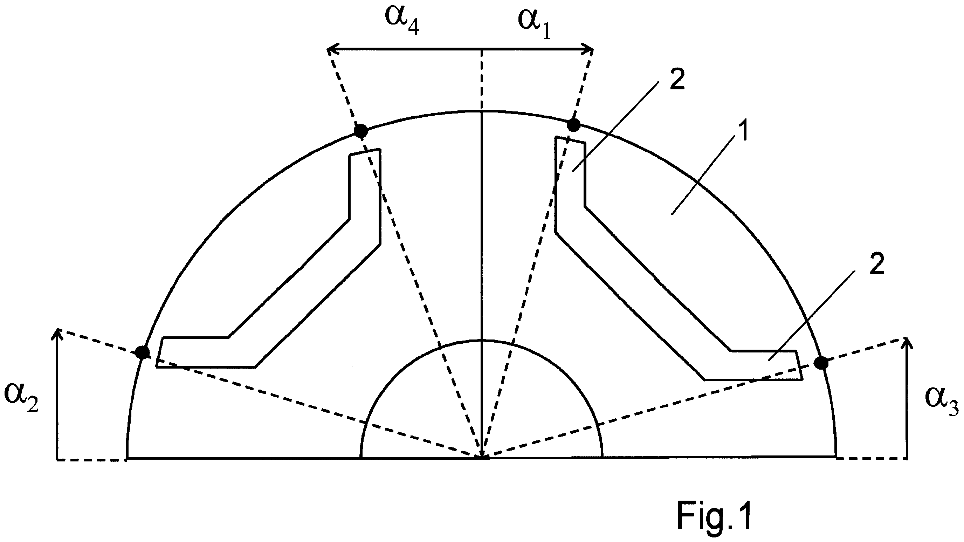

IN der Figur 1 ist der Winkelabstand der ersten Rotornut innerhalb der ersten Polteilung zum Beginn der ersten Polteilung mit a_3 bezeichnet, der Winkelabstand zwischen der zweiten Rotornut und dem Ende der ersten Polteilung mit α_1. Dabei dürfen a_1 und α_3 betragsgleich sein.

In der Figur 1 ist der Winkelabstand der ersten Rotornut innerhalb der zweiten Polteilung zum Beginn der zweiten Polteilung mit α_4 bezeichnet, der Winkelabstand zwischen der zweiten Rotornut und dem Ende der zweiten Polteilung mit α_2. Dabei dürfen α_2 und α_4 betragsgleich sein.

Jedoch ist erfindungsgemäß α_1, also der Winkelabstand innerhalb der ersten Polteilung zwischen der zweiten Rotornut und dem Ende der ersten Polteilung, unterschiedlich zu α_2, also zum Winkelabstand zwischen der zweiten Rotornut und dem Ende der zweiten Polteilung.

Zusätzlich oder alternativ ist erfindungsgemäß α_3, also der Winkelabstand innerhalb der ersten Polteilung zwischen der ersten Rotornut und dem Beginn der ersten Polteilung, unterschiedlich zu α_4, also zum Winkelabstand zwischen der ersten Rotornut und dem Beginn der zweiten Polteilung.

Die Polteilung fällt hier jeweils mit einer Symmetrieebene des Einzelblechteils zusammen.

Somit sind die Rotornuten der beiden in Umfangsrichtung aufeinander folgenden Polteilungen unterschiedlich positioniert innerhalb der jeweiligen Polteilung.

Durch diese Asymmetrie wird die Drehmomentwelligkeit des Motors reduziert. Denn bei der zum Stator relativen Drehbewegung des Rotors erzeugen die Rotornuten in Wirkverbindung mit den Statornuten winkelabhängig Oberwellen im Leitwert und somit auch im vom Motor erzeugten Drehmoment.

Trotz der Asymmetrie also der asymmetrischen Anordnung der Rotornuten in den nicht punktsymmetrisch zueinander liegenden Polteilungen, werden umlaufende Kräfte im Rotor vermieden und auch unterschiedliche induzierte Spannungen in den Stator-Wicklungssträngen eines jeweiligen Statorpols vermieden. Somit ist auch eine Statorwicklung mit parallel geschalteten Gruppen von Wicklungssträngen ermöglicht.

Erfindungsgemäß bewirkt also die Punktsymmetrie zusammen mit der ansonsten vorliegenden Asymmetrie eine verringerte Drehmomentwelligkeit ohne die genannten Nachteile.

Erfindungsgemäß sind also zumindest zwei unterschiedlich ausgeführte Pole, also unterschiedlich ausgeführte Polgeometrieen, vorhanden. Die Anzahl dieser unterschiedlichen Polgeometrieen entspricht einer ganzen Zahl aus dem Intervall von 1 bis p, wobei p die Polpaarzahl des Rotors ist.

Die Polpaarzahl ist somit ganzzahlig und größer als 1.

Der Rotor ist punktsymmetrisch zur Rotorachse.

In der Figur 1 ist für jede der beiden gezeigten Pole eine einzige Ausnehmung 2 als Flusssperre gezeigt. Dabei sind die Flusssperren in radialer Richtung hintereinander angereiht.

Der Rotor, insbesondere das jeweilige Einzelblech, darf zusätzliche Ausnehmungen aufweisen, die für jeden Pol gleichartig ausgeführt sind.

Mittels der Ausnehmungen sind Flusssperren realisiert, die direkt oder über im Betrieb des Motors mit Nennstrom gesättigte Stegbereiche an der Oberfläche münden. Diese Mündungsbereiche sind in Figur 1 idealisierend als Punkte dargestellt. Das Punktbild eines Umfangswinkelbereichs von 360°l(2p) ist durch eine Drehung von 90° nicht in Deckung bringbar mit dem Punktbild des benachbarten Umfangswinkelbereichs, der ebenfalls 360°/(2p) überdeckt.

Dabei grenzen beide Umfangswinkelbereiche an eine Symmetrieebene des Blechpakets an.

Das Punktbild der Mündungsbereiche, also Oberflächen-Mündungspunkte, in einer Polteilung bestimmt die Ausformung des jeweils zugehörigen Pols wesentlich. Der radial von der Rotoroberfläche weiter beabstandete Verlauf der jeweiligen Ausnehmung im Einzelblechteil ist für die Polform von vernachlässigbarer Bedeutung.

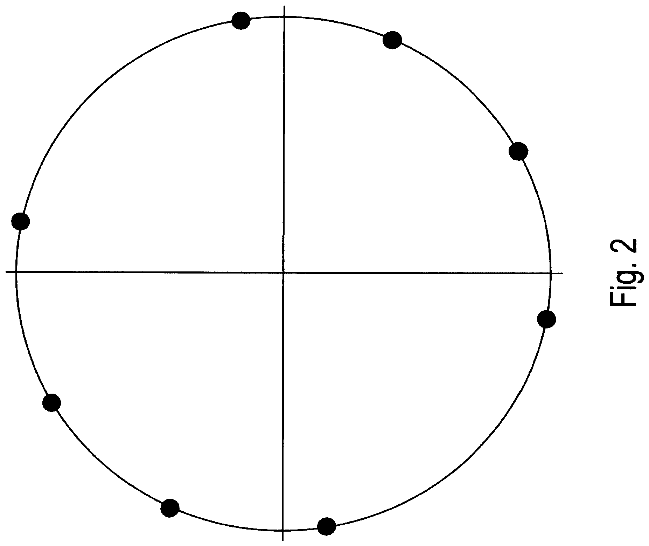

In Figur 2 sind nochmals die Punktbilder der vier Umfangswinkelbereiche bei der vierpoligen Maschine nach Figur 1 gezeigt.

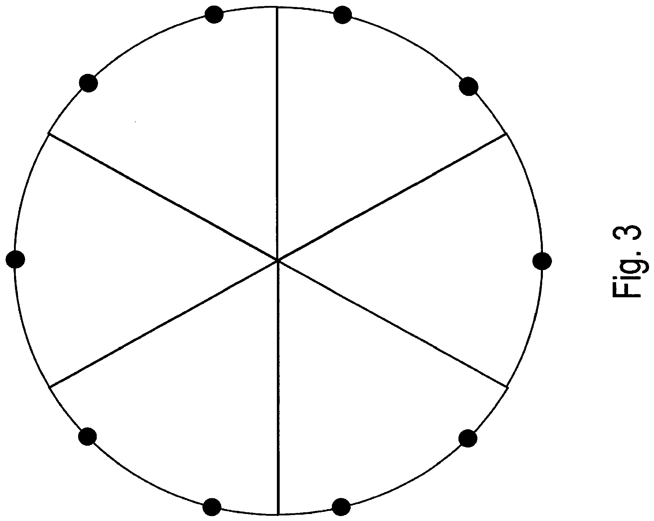

In Figur 3 sind die Punktbilder der sechs Umfangswinkelbereiche einer sechspoligen Maschine dargestellt, die drei Symmetrieebenen aufweist, welche als Symmetrielinien in der Schnittebene in Figur 2 dargestellt sind.

### Bezugszeichenliste

- 1: Einzelblechteil
- 2: Ausnehmung

## Patentansprüche

1. Elektromaschine mit Rotor,
wobei der Rotor ein Blechpaket aus Einzelblechteilen (1) aufweist,
wobei am Einzelblechteil (1) in Umfangsrichtung hintereinander Pole ausgebildet sind, wobei jeder Pol einen Winkelbereich, somit die Polteilung, überdeckt, wobei das Einzelblechteil (1) in jedem der Winkelbereiche eine einzige Ausnehmung (2) aufweist, somit jeder der Pole eine einzige Ausnehmung (2) aufweist, wobei jedem Pol punktsymmetrisch gegenüberliegend ein gleichartig geformter Pol angeordnet ist und wobei die anderen Pole zu ihm unterschiedlich geformt sind,
wobei jeder Pol zu jedem anderen, nicht punktsymmetrisch zu dem jeweiligen Pol angeordneten Pol unterschiedlich geformt ist und gleichartig geformt ist zu dem punktsymmetrisch zu dem jeweiligen Pol angeordneten Pol,
wobei die einzige Ausnehmung (2) der jeweils punktsymmetrisch zueinander angeordneten Pole punktsymmetrisch zueinander ausgeführt ist wobei die eine einzige Ausnehmung (2) eines Pols nur gleichartig geformt sind zur einzigen Ausnehmung (2) des punktsymmetrisch zu dem Pol angeordneten Pols und/oder durch Drehung um einen Winkelbetrag nur in Deckung bringbar ist zur einzigen Ausnehmung (2) des punktsymmetrisch zu dem Pol angeordneten Pols,
wobei die Pole eine einzige weitere Ausnehmung (2) aufweisen, die bei allen Polen gleichartig ausgebildet ist wobei der von jedem Pol überdeckte Winkelbereich betragsgleich ist, **dadurch gekennzeichnet, dass** jede der Ausnehmungen (2) in Umfangsrichtung bei einer ersten Winkelposition einen kleinsten Radialabstand aufweist und bei einer in Umfangsrichtung zur ersten Winkelposition beabstandeten zweiten Winkelposition einen maximalen Radialabstand und bei einer entgegen der Umfangsrichtung zur ersten Winkelposition beabstandeten dritten Winkelposition einen maximalen Radialabstand,
wobei eine erste Winkeldifferenz (α_1) dem Winkelabstand vom Beginn des Winkelbereichs zur zweiten Winkelposition entspricht,
wobei eine zweite Winkeldifferenz (α_3) dem Winkelabstand vom Ende des Winkelbereichs zur dritten Winkelposition entspricht,
wobei die erste Winkeldifferenz (α_1) eines Pols stets unterschiedlich ist zur ersten Winkeldifferenz (α_2) des in oder entgegen der Umfangsrichtung benachbarten Pols und wobei die zweite Winkeldifferenz (α_3) eines Pols stets unterschiedlich ist zur zweiten Winkeldifferenz (α_4) des in oder entgegen der Umfangsrichtung benachbarten Pols.

2. Elektromaschine nach Anspruch 1.
**dadurch gekennzeichnet, dass**
jeder Pol zumindest eine Flusssperre aufweist, die durch die Ausnehmung (2) gebildet ist.

3. Elektromaschine nach mindestens einem der vorangegangenen Ansprüche,
**dadurch gekennzeichnet, dass**
in Umfangsrichtung vier Pole hintereinander angeordnet sind.

4. Elektromaschine nach mindestens einem der vorangegangenen Ansprüche,
**dadurch gekennzeichnet, dass**
das Blechpaket in axialer Richtung aus einer Anzahl m von Segmenten zusammengesetzt ist, wobei die Segmente gleichartig ausgeführt sind, aber jedes Segment zum axial benachbarten Segment einen in Umfangsrichtung vorgesehenen Verdrehwinkelbetrag von 360°/(m ^{∗} n_S) aufweist,
wobei n_S die Anzahl der in Umfangsrichtung hintereinander angeordneten Statornuten ist.

5. Elektromaschine nach mindestens einem der vorangegangenen Ansprüche, **dadurch gekennzeichnet, dass**
jeder Pol eine durch eine jeweilige Ausnehmung (2) gebildete Flusssperre aufweist.

6. Elektromaschine nach mindestens einem der vorangegangenen Ansprüche, **dadurch gekennzeichnet, dass**
der Stator der Elektromaschine eine in Umfangsrichtung hintereinander angeordnete und jeweils einzeln bewickelte Zähne aufweist.

## Claims

1. Electric machine having a rotor,
wherein the rotor has a laminated core formed of individual sheet parts (1),
wherein, on the individual sheet part (1), poles are formed one behind the other in the circumferential direction, wherein each pole covers an angle range, thus the pole pitch,
wherein the individual sheet part (1) has a single cutout (2) in each of the angle ranges, thus each of the poles has a single cutout (2),
wherein an identically shaped pole is arranged point-symmetrically opposite each pole, and wherein the other poles are shaped differently thereto,
wherein each pole is shaped differently to every other pole that is not arranged point-symmetrically to the respective pole, and is shaped identically to the pole that is arranged point-symmetrically to the respective pole,
wherein the single cutout (2) of the poles that are arranged in each case point-symmetrically to one another is formed point-symmetrically to one another,
wherein the one single cutout (2) of a pole are shaped identically only to the single cutout (2) of the pole that is arranged point-symmetrically to the pole and/or can be brought into congruence, by rotation through an angular amount, only with the single cutout (2) of the pole that is arranged point-symmetrically to the pole,
wherein the poles have a single further cutout (2), which is formed identically on all poles,
wherein the angle range covered by each pole is equal in amount, **characterized in that**
each of the cutouts (2) has a smallest radial distance at a first angle position in the circumferential direction and has a maximum radial distance at a second angle position which is spaced apart from the first angle position in the circumferential direction and has a maximum radial distance at a third angle position which is spaced apart from the first angle position counter to the circumferential direction, wherein a first angle difference (α_1) corresponds to the angle distance from the start of the angle range to the second angle position,
wherein a second angle difference (α_3) corresponds to the angle distance from the end of the angle range to the third angle position,
wherein the first angle difference (α_1) of a pole is always different from the first angle difference (α_2) of the pole adjacent thereto in or counter to the circumferential direction, and wherein the second angle difference (α_3) of a pole is always different from the second angle difference (α_4) of the pole adjacent thereto in or counter to the circumferential direction.

2. Electric machine according to claim 1,
**characterized in that**
each pole has at least one flux barrier, which is formed by the cutout (2).

3. Electric machine according to at least one of the preceding claims,
**characterized in that**
four poles are arranged one behind the other in the circumferential direction.

4. Electric machine according to at least one of the preceding claims,
**characterized in that**
the laminated core is composed, in the axial direction, of a number m of segments, wherein the segments are identical but each segment has, in relation to the axially adjacent segment, a rotation angle amount of 360°/(m^{∗}n_S) provided in the circumferential direction,
wherein n_S is the number of stator grooves arranged one behind the other in the circumferential direction.

5. Electric machine according to at least one of the preceding claims,
**characterized in that**
each pole has a flux barrier formed by a respective cutout (2).

6. Electric machine according to at least one of the preceding claims,
**characterized in that**
the stator of the electric machine has a teeth which are each individually wound and which are arranged one behind the other in the circumferential direction.

## Revendications

1. Machine électrique dotée d'un rotor,
sachant que le rotor présente un empilage de tôles constitué de tôles individuelles (1), sachant que des pôles sont réalisés les uns à la suite des autres dans le sens périphérique sur la tôle individuelle (1), sachant que chaque pôle couvre une plage angulaire, donc le pas polaire,
sachant que la tôle individuelle (1) présente un unique évidement (2) dans chacune des plages angulaires, donc chacun des pôles présente un unique évidement (2),
sachant qu'un pôle semblablement formé est disposé en vis-à-vis de chaque pôle en symétrie ponctuelle et sachant que les autres pôles sont formés différemment par rapport à lui,
sachant que chaque pôle est formé différemment par rapport à chaque autre pôle, non disposé en symétrie ponctuelle par rapport au pôle respectif, et est semblablement formé par rapport au pôle disposé en symétrie ponctuelle par rapport au pôle respectif,
sachant que les uniques évidements (2) des pôles respectivement disposés en symétrie ponctuelle les uns par rapport aux autres sont réalisés en symétrie ponctuelle les uns par rapport aux autres,
sachant que l'unique évidement (2) d'un pôle est seulement semblablement formé par rapport à l'unique évidement (2) du pôle disposé en symétrie ponctuelle par rapport au pôle, et/ou peut être seulement amené en recouvrement, par rotation d'un montant angulaire, avec l'unique évidement (2) du pôle disposé en symétrie ponctuelle par rapport au pôle,
sachant que les pôles présentent un unique autre évidement (2), qui est semblablement réalisé pour tous les pôles,
sachant que la plage angulaire couverte par chaque pôle est d'un montant identique, **caractérisée en ce que** chacun des évidements (2) présente une distance radiale minimale à une première position angulaire dans le sens périphérique et une distance radiale maximale à une deuxième position angulaire distante de la première position angulaire dans le sens périphérique, et une distance radiale maximale à une troisième position angulaire distante de la première position angulaire dans le sens contraire au sens périphérique,
sachant qu'une première différence angulaire (α_1) correspond à la distance angulaire du début de la plage angulaire à la deuxième position angulaire,
sachant qu'une deuxième différence angulaire (α_3) correspond à la distance angulaire de la fin de la plage angulaire à la troisième position angulaire,
sachant que la première différence angulaire (α_1) d'un pôle est toujours différente de la première différence angulaire (α_2) du pôle voisin dans le sens périphérique ou dans le sens contraire,
et sachant que la deuxième différence angulaire (α_3) d'un pôle est toujours différente de la deuxième différence angulaire (α_4) du pôle voisin dans le sens périphérique ou dans le sens contraire.

2. Machine électrique selon la revendication 1, **caractérisée en ce que** chaque pôle présente au moins une barrière de flux, qui est formée par l'évidement (2).

3. Machine électrique selon au moins une des revendications précédentes, **caractérisée en ce que** quatre pôles sont disposés les uns à la suite des autres dans le sens périphérique.

4. Machine électrique selon au moins une des revendications précédentes, **caractérisée en ce que** l'empilage de tôles est composé en direction axiale d'un nombre m de segments, sachant que les segments sont semblablement réalisés, mais que chaque segment présente, par rapport au segment axialement voisin, un montant d'angle de torsion prévu dans le sens périphérique de 360° /(m ^{∗} n_S),
sachant que n_S est le nombre des rainures de stator disposées les unes à la suite des autres dans le sens périphérique.

5. Machine électrique selon au moins une des revendications précédentes, **caractérisée en ce que** chaque pôle présente une barrière de flux formée par un évidement respectif (2).

6. Machine électrique selon au moins une des revendications précédentes, **caractérisée en ce que** le stator de la machine électrique présente des dents disposées les unes à la suite des autres dans le sens périphérique et respectivement individuellement pourvues d'un enroulement.
